# DEMANDE DE BREVET EUROPEEN

(11) **EP 3 636 907 A1**
(43) Date de publication de la demande: **15.04.2020**
(21) Numéro de dépôt: 19201895.0
(22) Date de dépôt: 08.10.2019
(51) Int. Cl.: F02K 9/28, F02K 9/34, F02K 9/97

(54) **FOND INTERMEDIAIRE POUR ENCEINTE SOUS PRESSION**

(30) Priorité: 12.10.2018 FR 1859505
(71) Demandeur: ROXEL France, 33167 Saint-Medard en Jalles Cedex (FR)
(72) Inventeur: ZANELLI, Didier, 33160 SAINT-MEDARD-EN-JALLES (FR)
(74) Mandataire: Honnet, Sylvie Florence Liliane

(57) **Abrégé**

L'invention se situe dans le domaine de la gestion de pressions et concerne un fond intermédiaire (10) pour enceinte sous pression à deux chambres (11, 12), le fond intermédiaire (10) étant destiné à être positionné entre une première chambre (11) et une deuxième chambre (12) de l'enceinte sous pression, et configuré pour résister à une première pression prédéterminée dans la première chambre (11) et laisser s'écouler un fluide issu de la deuxième chambre (12) au-delà d'une deuxième pression prédéterminée, caractérisé en ce qu'il comprend :
- une structure de base (13) métallique comprenant une première face (31) destinée à être positionnée vers la première chambre (11), une deuxième face (32) destinée à être positionnée vers la deuxième chambre (12), une pluralité d'ouvertures traversantes (14) entre la première face (31) et la deuxième face (32) ayant pour section un motif de type polygonal,
- un cadre externe (41) sur sa périphérie,
- un premier opercule métallique superposé à la première face (31) recouvrant la pluralité d'ouvertures traversantes (14).

## Description

La présente invention se situe dans le domaine de la gestion de pressions. Elle concerne un fond intermédiaire pour enceinte sous pression à deux chambres. L'invention concerne également un propulseur équipé d'un tel fond intermédiaire.

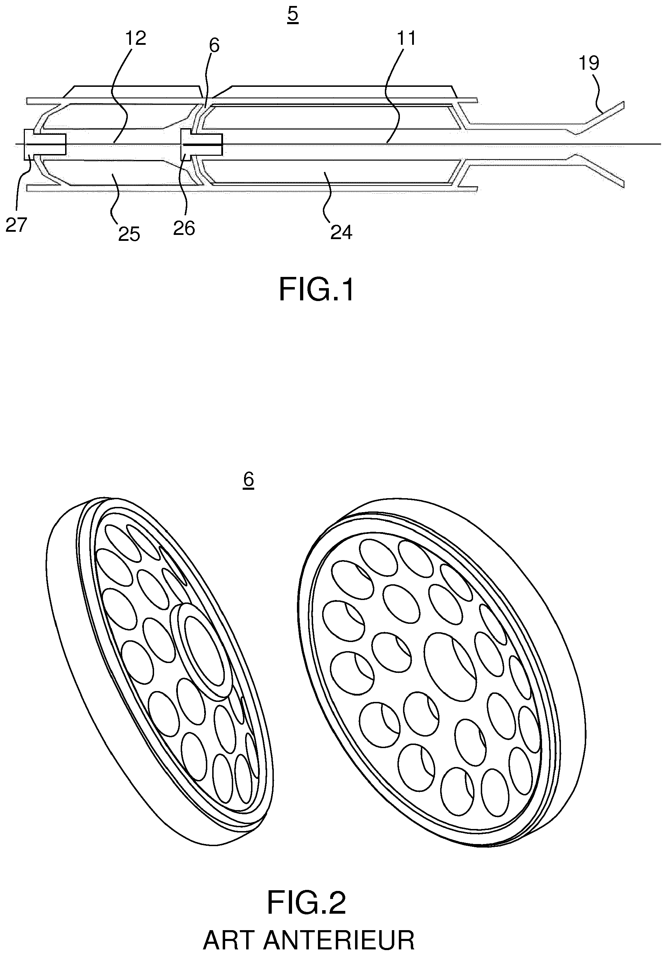

Dans le domaine de la propulsion, la recherche permanente de portée plus importante a conduit au développement de systèmes propulsifs solides dits bipulses, comme représenté schématiquement sur la figure 1. Ce type de système 5 comporte deux chargements propulsifs 24, 25, deux dispositifs d'allumage 26, 27 et un ensemble unique 19 de une ou plusieurs tuyères par lequel va s'effectuer la détente des gaz de combustion issus de la combustion des chargements propulsifs, afin de créer une poussée optimale.

En fonctionnement, une première poussée est produite par initiation du premier chargement de propergol solide par le premier dispositif d'allumage. Pendant cette phase, les gaz débités sont accélérés par l'ensemble de tuyère(s), comme sur un propulseur monopulse conventionnel. Il est nécessaire de protéger le deuxième chargement propulsif des gaz de combustion du premier chargement, sous peine de produire son allumage. Pour assurer cette protection, un fond intermédiaire 6 est intercalé entre les deux chargements propulsifs 24, 25. Ce fond intermédiaire doit résister à la pression des gaz délivrés par le premier chargement propulsif avec une marge suffisante. Typiquement, si la pression de fonctionnement maximale du premier chargement est de 15 MPa, la pression de tenue maximale du fond intermédiaire doit être de 15MPa augmentée d'un coefficient de sécurité de l'ordre de 1,5, soit 22,5 MPa. Cette tenue doit prendre en compte les échauffements pendant la durée de fonctionnement du premier chargement propulsif.

Ensuite, une deuxième poussée est produite par initiation du deuxième chargement de propergol solide par le deuxième dispositif d'allumage. Le fond intermédiaire s'ouvre. Les gaz s'écoulent alors au travers du fond intermédiaire, puis dans la chambre de combustion du premier chargement maintenant vide, avant d'atteindre l'ensemble de tuyère(s) où les gaz sont accélérés et convertis en poussée.

Le rôle du fond intermédiaire est multiple : en plus de protéger le deuxième chargement propulsif lors de l'allumage et la combustion du premier chargement propulsif, il doit s'ouvrir sous une pression du deuxième chargement basse afin de minimiser le choc à l'allumage et offrir une section de passage aux gaz issus du deuxième chargement aussi grande que possible pour minimiser les érosions du fond intermédiaire et de la protection thermique de la première chambre de combustion pendant la phase d'homogénéisation de l'écoulement résultant et minimiser la chute de pression entre les deux chambres.

Il existe des solutions pour séparer les chargements des systèmes propulsifs bipulses. On peut notamment citer les parois souples pelables ou non. Ces solutions présentent des inconvénients. Les parois souples doivent être fixées sur la structure du système soit par collage soit par un système mécanique volumineux. La testabilité de l'étanchéité de la paroi n'est souvent pas possible. La durabilité du collage critique pour la fonction de propulsion peut être une difficulté.

La technologie de paroi souple impose généralement une géométrie de chargement simple qui s'accommode assez mal de l'exigence de profil de poussée aussi constant que possible.

Le procédé de chargement avec l'emploi d'une paroi souple est complexe. Les chargements sont coulés successivement, le premier voyant deux cuissons, dont la première peut n'être que partielle. Pendant la coulée et la cuisson, la paroi souple subit des agressions mécanique et chimique importantes.

Par ailleurs, il est impératif que la paroi souple soit chimiquement compatible avec les deux propergols des deux chargements. Les plastifiants contenus dans les formulations des propergols peuvent, le cas échéant, altérer la durabilité des collages de la paroi souple.

Enfin, dans le cas d'une paroi souple pelable, afin de délivrer toute la performance d'un propulseur bipulse, il faut garantir le pelage intégral de la paroi après un vieillissement de plusieurs dizaines d'années.

Il existe aussi par exemple des fonds intermédiaires rigides présentant des perforations circulaires pour laisser passer les gaz issus de la combustion du deuxième chargement. Un tel fond intermédiaire 6 de l'art antérieur est représenté schématiquement sur la figure 2. Les fonds intermédiaires rigides de l'art antérieur ne sont pas optimaux car ils présentent une surface inutile qui va s'opposer à l'écoulement des gaz issus du deuxième chargement. Il en résulte des zones de recirculations locales et des zones de forte concentration de vitesse qui ne sont pas souhaitées. De même, la section de passage des gaz entre les deux chambres est limitée.

L'invention vise à pallier tout ou partie des problèmes cités plus haut en proposant un fond intermédiaire rigide facile d'intégration dans un propulseur bipulse, sans imposer de contrainte de géométrie aux chargements, permettant un procédé de chargement simplifié, sans problème de compatibilité chimique avec les chargements propulsifs. Le fond intermédiaire rigide selon l'invention permet également une diminution de sa masse, de son volume tout en augmentant la section de passage des gaz.

A cet effet, l'invention a pour objet un fond intermédiaire pour enceinte sous pression à deux chambres, le fond intermédiaire étant destiné à être positionné entre une première chambre et une deuxième chambre de l'enceinte sous pression, et configuré pour résister à une première pression prédéterminée dans la première chambre et laisser s'écouler un fluide issu de la deuxième chambre au-delà d'une deuxième pression prédéterminée. Selon l'invention, le fond intermédiaire comprend :
- une structure de base comprenant une première face destinée à être positionnée vers la première chambre, une deuxième face destinée à être positionnée vers la deuxième chambre, une pluralité d'ouvertures traversantes entre la première face et la deuxième face ayant pour section un motif de type polygonal,
- un premier opercule métallique superposé à la première face recouvrant la pluralité d'ouvertures traversantes.

Avantageusement, une section d'un motif de type polygonal a une arête sensiblement parallèle à une arête d'une section d'un motif de type polygonal qui lui est adjacent.

Selon un mode de réalisation, au moins une parmi la pluralité d'ouvertures traversantes comprend un moyen pour réduire les concentrations de contraintes au niveau d'au moins une intersection de deux arêtes de la section, préférentiellement un chanfrein ou un congé de raccordement.

Selon un autre mode de réalisation, au moins une parmi la pluralité d'ouvertures traversantes comprend un moyen pour faciliter l'entrée de l'écoulement au niveau de l'intersection entre ladite ouverture traversante et la deuxième face, préférentiellement un congé de raccordement ou un chanfrein.

La structure de base peut être en céramique ou métallique.

Avantageusement, la première face et/ou deuxième face et/ou des faces latérales d'au moins une parmi la pluralité des ouvertures traversantes de la structure de base métallique sont recouvertes au moins partiellement d'une protection thermique.

Selon un autre mode de réalisation, le fond intermédiaire comprend un cadre externe sur sa périphérie, le cadre externe comprend une face externe s'étendant à l'opposé de la structure de base et deux faces internes destinées à être en contact respectivement avec la première et la deuxième chambres, et le fond intermédiaire comprend au moins un conduit s'étendant entre la face externe et une des chambres.

Selon un autre mode de réalisation, le fond intermédiaire comprend au moins un deuxième opercule métallique superposé à la première face et au premier opercule.

Selon un autre mode de réalisation, le fond intermédiaire comprend en outre au moins un élément de souplesse positionné entre le premier opercule et le deuxième opercule et/ou entre deux opercules adjacents.

Selon un autre mode de réalisation, la structure de base comprend une ouverture centrale traversante entre la première face et la deuxième face et un cadre interne délimitant l'ouverture centrale.

L'invention concerne le mode de réalisation d'un fond intermédiaire, l'enceinte sous pression à deux chambres étant un propulseur bipulse, le propulseur bipulse comprenant :
- la première chambre étant une première chambre de combustion destinée à recevoir un premier chargement propulsif et la deuxième chambre étant une deuxième chambre de combustion destinée à recevoir un deuxième chargement propulsif,
- un premier dispositif d'allumage destiné à allumer le premier chargement propulsif,
- un deuxième dispositif d'allumage destiné à allumer le deuxième chargement propulsif,
- un ensemble-tuyère composé de une ou plusieurs tuyères par lequel la détente de gaz de combustion issus du premier et/ou deuxième chargements propulsifs après allumage du premier et/ou deuxième chargements propulsifs s'effectue, le fond intermédiaire étant configuré pour résister à la première pression prédéterminée dans la première chambre de combustion due aux gaz de combustion issus du premier chargement propulsif après allumage du premier chargement propulsif et laisser s'écouler le fluide formé des gaz de combustion issus du deuxième chargement propulsif après allumage du deuxième chargement propulsif.

L'invention concerne aussi un propulseur comprenant au moins deux chambres de combustion, chacune étant destinée à recevoir un chargement propulsif, et comprenant au moins un fond intermédiaire tel que décrit dans cette demande, positionné entre les deux chambres de combustion.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un système propulsif bipulse connu ;
- la figure 2 représente schématiquement un fond intermédiaire selon l'art antérieur ;
- la figure 3 représente schématiquement un mode de réalisation d'un fond intermédiaire selon l'invention ;
- la figure 4 représente schématiquement un autre mode de réalisation d'un fond intermédiaire selon l'invention ;
- la figure 5 représente schématiquement une variante de section des ouvertures traversantes du fond intermédiaire selon l'invention ;
- la figure 6 représente schématiquement des exemples de sections des ouvertures traversantes du fond intermédiaire selon l'invention ;
- la figure 7 représente schématiquement un autre mode de réalisation d'un fond intermédiaire selon l'invention ;
- la figure 8 représente schématiquement une autre vue d'un fond intermédiaire selon l'invention ;
- la figure 9 représente schématiquement un autre mode de réalisation d'un fond intermédiaire permettant la réalisation de tests d'étanchéité et/ou hermicité selon l'invention ;
- la figure 10 représente schématiquement une vue en coupe d'un autre mode de réalisation d'un fond intermédiaire à sécurité augmentée selon l'invention ;
- la figure 11 représente schématiquement un propulseur bipulse selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

L'invention est décrite dans le domaine de la propulsion solide, en relation avec un propulseur bipulse. Il peut bien évidemment s'agir d'un propulseur avec plus de deux puises, avec plus de deux chargements propulsifs et autant de fonds intermédiaires qu'il y a de chambres de combustion à séparer. En outre, l'invention s'applique à tout autre domaine nécessitant la gestion de pressions. Notamment, le fond intermédiaire selon l'invention résiste à une pression élevée dans un sens de sollicitation (de la première chambre 11 vers la deuxième chambre 12) et laisse échapper un écoulement de fluide (liquide ou gazeux) dans l'autre sens de sollicitation (de la deuxième chambre 12 vers la première chambre 11) dès que la pression associée dépasse un niveau de seuil faible, typiquement avec un rapport de pression compris entre 5 :1 et 20 :1.

Ainsi, outre le propulseur bipulse, l'invention peut trouver application en tant que fond diode ou élément de sécurité sur des conteneurs devant résister à des pressions externes élevées et libérer la pression interne aussitôt que celle-ci s'élève, ou l'inverse. La forme extérieure cylindrique n'est pas obligatoire, elle est adaptée pour la propulsion de missile tactique (aérodynamique externe). Pour d'autres applications, elle pourrait être de n'importe quelle autre section, par exemple carrée, triangulaire...
La **figure 1** représente schématiquement un système propulsif bipulse 5 connu et a déjà été présenté dans l'introduction.
La **figure 2** représente schématiquement un fond intermédiaire 6 selon l'art antérieur et a été discuté dans l'introduction.

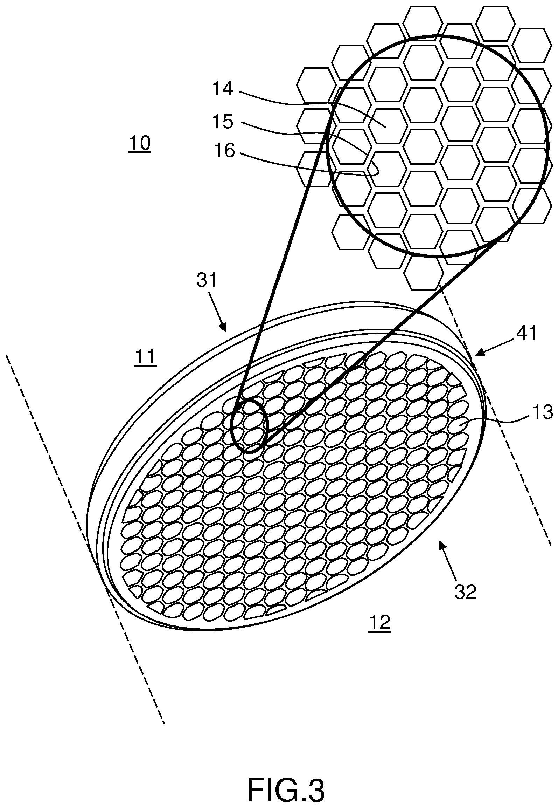

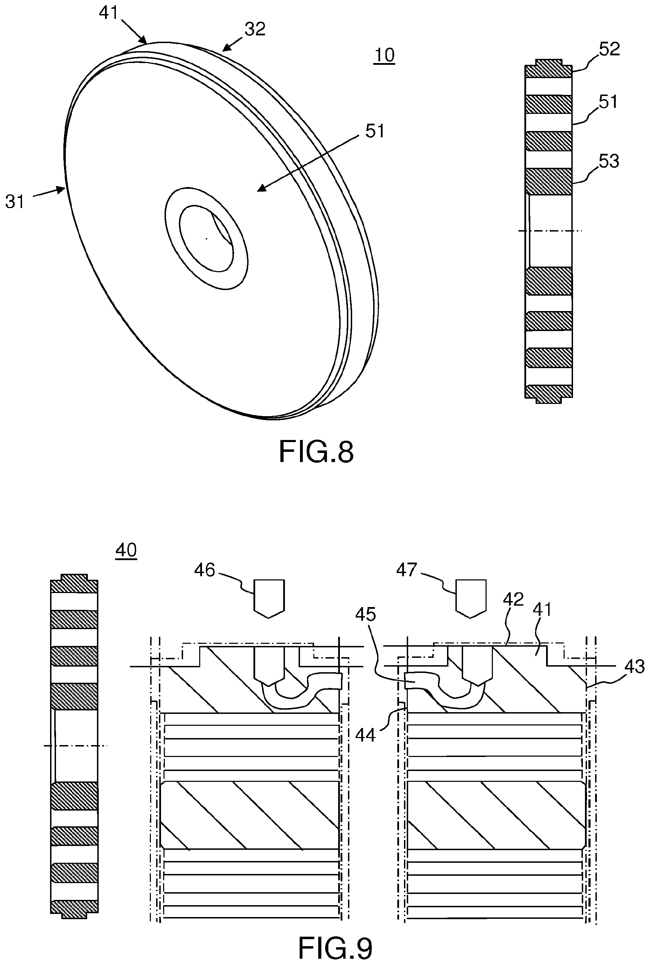

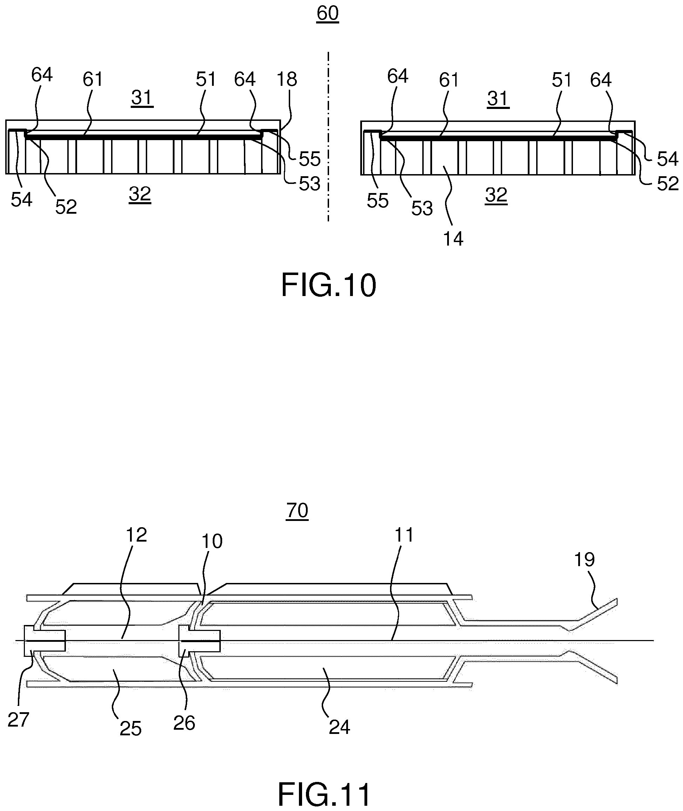

La **figure 3** représente schématiquement un mode de réalisation d'un fond intermédiaire 10 selon l'invention. Le fond intermédiaire 10 représenté sur la figure 3 est prévu pour équiper une enceinte sous pression à deux chambres 11, 12. Il est destiné à être positionné entre une première chambre 11 et une deuxième chambre 12 de l'enceinte sous pression, et configuré pour résister à une première pression prédéterminée dans la première chambre 11 et laisser s'écouler un fluide (gaz ou liquide, nous prenons ici l'exemple non limitatif de gaz) issu de la deuxième chambre 12 au-delà d'une deuxième pression prédéterminée (plus précisément au-delà d'une variation de pression entre la deuxième chambre et la première chambre prédéterminée. Pour faciliter la lecture, nous parlons de pression dans la deuxième chambre même s'il s'agit en fait plus précisément d'une variation, comme expliqué plus haut, de pression entre la deuxième chambre et la première chambre prédéterminée). Selon l'invention, le fond intermédiaire 10 comprend une structure de base 13 comprenant une première face 31 destinée à être positionnée vers la première chambre 11, une deuxième face 32 destinée à être positionnée vers la deuxième chambre 12, une pluralité d'ouvertures traversantes 14 entre la première face 31 et la deuxième chambre 12 (c'est-à-dire que les ouvertures 14 sont traversantes entre la première chambre et la deuxième chambre) ayant pour section un motif de type polygonal. Le fond intermédiaire 10 selon l'invention comprend en outre un premier opercule métallique 51 (non représenté sur la figure 3, mais représenté plus précisément à la figure 8) superposé à la première face 31 recouvrant la pluralité d'ouvertures traversantes 14. Le fond intermédiaire 10 peut comprendre un cadre externe 41 sur sa périphérie. Le premier opercule métallique 51 peut être fixé à la structure de base 13 au niveau du cadre externe 41 par un premier moyen de fixation 52 (non représenté mais représenté sur les figures 8 et 10), ou bien il peut être fixé à la structure de la première chambre de combustion. Le premier moyen de fixation 52 peut être un cordon de soudure, ou tout autre moyen de fixation adapté tel qu'une vis ou un rivet qui puisse assurer à la fois la tenue mécanique et l'étanchéité.

En d'autres termes, la structure de base 13 comprend une pluralité de perforations qui ont pour section un polygone, c'est-à-dire une ligne brisée fermée.

Comme expliqué précédemment, le premier chargement 24, une fois allumé, produit une première poussée qui correspond à la première pression prédéterminée par le type de chargement propulsif considéré. Pendant cette phase, les gaz débités sont accélérés par l'ensemble-tuyère 19. Le fond intermédiaire 10 protège le deuxième chargement propulsif 25 des gaz de combustion du premier chargement 24. L'opercule métallique 51 assure l'étanchéité. Il est par exemple soudé sur des bagues du cadre externe 41 par un cordon de soudure 52 afin d'assurer l'étanchéité aux gaz de combustion issu du premier chargement propulsif 24 et la tenue aux efforts de pression du premier chargement (de l'ordre de 25 MPa). Typiquement, l'épaisseur de l'opercule est de 0,05 à 0,2mm selon l'acier utilisé qui doit préférentiellement être soudable aux bagues. Préférentiellement, un acier à très haute déformation à rupture est utilisé pour réaliser l'opercule 51. Avantageusement, mais non obligatoirement, on utilise du X2CrNi18-09(T651) si le cadre externe 41 est en Maraging 300 (inox renforcé de cobalt avec rajout de 18% de nickel). L'opercule 51 se déforme tout en résistant à l'effort et en assurant l'étanchéité à la pression des gaz de combustion issue de la première chambre 11.

Après un délai calculé en fonction de la mission à effectuer (généralement de l'ordre de quelques secondes à quelques dizaines de secondes), le deuxième chargement 25 est allumé. Le fond intermédiaire s'ouvre sous une pression provenant cette fois de la deuxième chambre 12. On parle de désoperculage. On choisit typiquement une pression dite de désoperculage du fond intermédiaire de l'ordre de 4 MPa. Les gaz s'écoulent alors à travers le fond intermédiaire 10, à travers la pluralité d'ouvertures traversantes 14, puis dans la première chambre 1, vide, pour atteindre l'ensemble-tuyère 19.

Ainsi, le fond intermédiaire 10 selon l'invention s'ouvre sous une pression issue de la deuxième chambre 12 basse, afin de minimiser le choc à l'allumage. La pression de désoperculage (c'est-à-dire d'ouverture de l'opercule) du fond intermédiaire est choisie compatible d'un allumage dans les règles de l'art. Le fond intermédiaire offre aussi une section de passage des gaz issus du deuxième chargement aussi grande que possible.

En effet, avantageusement, une section d'un motif de type polygonal a une arête 15 sensiblement parallèle à une arête 16 d'une section d'un motif de type polygonal qui lui est adjacent (voir le zoom local des ouvertures traversantes 14 en haut de la figure 3). Autrement dit, les sections s'imbriquent les unes à côté des autres et laissent peu d'espace entre deux perforations adjacentes. Il en résulte une surface utile pour l'écoulement maximale. Pour autant, la résistance mécanique du fond intermédiaire 10 ainsi obtenu est excessivement grande. Les contraintes dans la structure sont bien réparties.

Le fond intermédiaire 10 est optimisé pour sa fabrication. Alors que la réalisation d'un fond intermédiaire en acier structural par un procédé d'usinage conventionnel est difficile voire impossible, la réalisation par fabrication additive par fusion de poudre, fusion laser ou par faisceau d'électrons est tout à fait adaptée. Les reprises d'usinage sont minimales, ce qui contribue à minimiser le coût total de production du fond intermédiaire. De même, l'épaisseur du fond intermédiaire est minimale grâce aux grandes rigidité et résistance de la géométrie, minimisant l'encombrement du fond intermédiaire.

L'invention repose sur le motif répétitif ayant pour section un polygone. La section peut être de forme triangulaire, carrée, rectangulaire, pentagonale, hexagonale, octogonale ou toute autre forme de polygone ou toute autre combinaison de formes polygonales. Il faut noter que certaines sections sont préférables, par exemple les sections hexagonales. Dans le cas de sections pentagonales ou octogonales, les motifs s'imbriquent de manière moins optimale les uns à côté des autres, laissant de l'espace entre les ouvertures traversantes. Il est alors intéressant de positionner entre deux ouvertures espacées, une ouverture avec une autre section (losange ou autre) et/ou de section de plus petite taille. Sur le pourtour de la structure (extérieur, et intérieur le cas échéant), il est possible que les ouvertures soient incomplètes et ne forment alors pas une section polygonale. Ces cellules peuvent être tout de même maintenues ou si elles ont une section trop petite, elles peuvent être éliminées.

Il en résulte une grande rigidité et résistance en flexion induite par la pression de fonctionnement du premier chargement propulsif 24. Par exemple, avec un motif hexagonal comme représenté sur la figure 3, la structure de base 13 ressemble à un nid d'abeille rigide en flexion, léger et compact. La section de passage pour l'écoulement des gaz produits par le deuxième chargement 25 offerte par la juxtaposition des alvéoles (ou perforations, ouvertures traversantes 14) est maximale.

Il peut être noté que dans le cas du fond intermédiaire 10 représenté sur la figure 3, le dispositif d'allumage 26 du premier chargement 24 n'est pas localisé sur le fond intermédiaire 10 mais il est déporté, par exemple dans un ensemble arrière du propulseur. Ceci est une variante, mais une autre variante est envisageable comme expliqué ci-dessous.

Enfin, sur le fond intermédiaire représenté sur la figure 3, nous pouvons apercevoir des congés de raccordement et des chanfreins. Il faut préciser que les congés de raccordement et les chanfreins ne sont pas obligatoires, mais les uns ou les autres, ou les deux, peuvent être présents, comme expliqué ci-après.

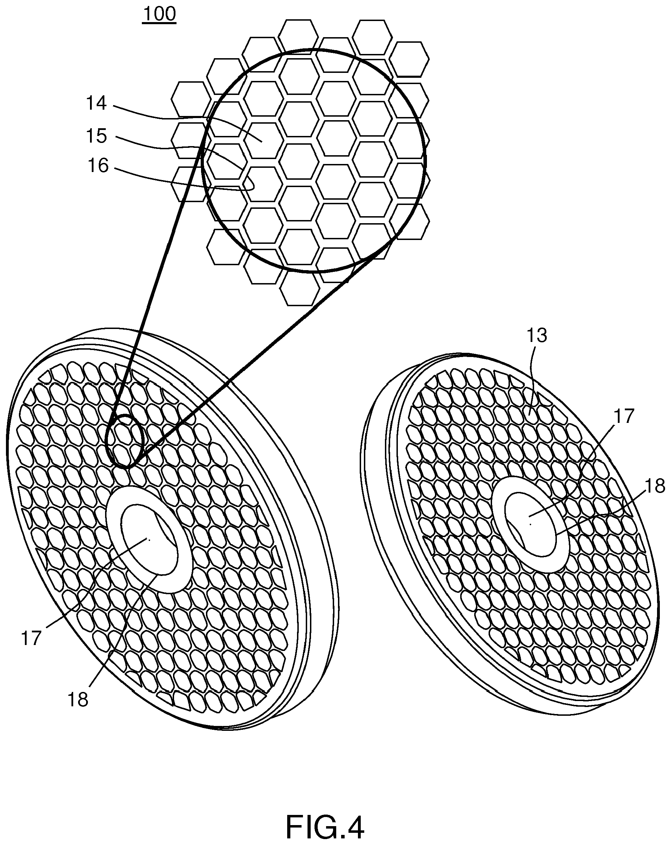

La **figure 4** représente schématiquement un autre mode de réalisation d'un fond intermédiaire 100 selon l'invention. La structure de base 13 du fond intermédiaire 100 représenté sur la figure 4 est identique à celle du fond intermédiaire 10 représenté sur la figure 3. Le fond intermédiaire 100 comprend en outre une ouverture centrale traversante 17 entre la première chambre 11 et la deuxième chambre 12 et un cadre interne 18 délimitant l'ouverture centrale 17. L'ouverture centrale traversante 17 est destinée à recevoir le premier dispositif d'allumage 26 et le cadre interne 18 est destiné à former un support pour le premier dispositif d'allumage 26.

Avec ou sans ouverture centrale 17, de par les ouvertures traversantes 14, la section de passage des gaz est deux fois supérieure par rapport à un fond intermédiaire de l'art antérieur comme celui représenté sur la figure 2 (plus de quatre fois la section de col) et la masse est réduite (de l'ordre de 30%). La hauteur (c'est-à-dire l'épaisseur du fond) est également inférieure à celle d'un fond de l'art antérieur. L'écoulement au travers du fond intermédiaire selon l'invention est le plus homogène possible, les survitesses et recirculations des gaz sont minimales.

L'ensemble d'opercule(s) est moins sollicité par le premier chargement propulsif 24 du fait de la taille inférieure des perforations polygonales 14 comparées aux grosses perforations circulaires d'un fond intermédiaire de l'art antérieur. Des opercules plus fins peuvent être utilisés, ce qui permet de satisfaire d'autant mieux l'exigence de désoperculage à pression basse sous l'effet du deuxième chargement propulsif 25.

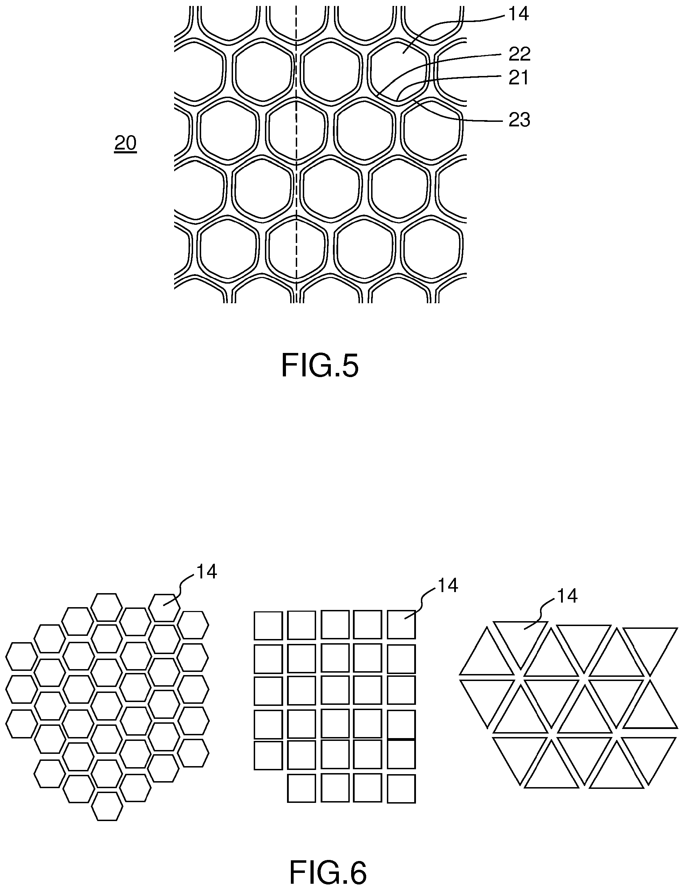

La **figure 5** représente schématiquement une variante de section des ouvertures traversantes 14 d'un fond intermédiaire 20 selon l'invention. Le fond intermédiaire 20, seulement représenté en partie sur la figure 5 (seule une portion de la structure de base est représentée), est identique aux fonds intermédiaires 10 et 100 présentés précédemment. Il se différencie des fonds intermédiaires 10, 100 en ce qu'au moins une parmi la pluralité d'ouvertures traversantes 14 comprend un moyen pour réduire les concentrations de contraintes, par exemple un congé de raccordement 21 au niveau d'au moins une intersection de deux arêtes 22, 23 consécutives de la section. Autrement dit, une ou plusieurs perforations 14 peuvent avoir un congé de raccordement au niveau d'une intersection de deux arêtes consécutives de la section, ou au niveau de deux intersections, ou de toutes les intersections. Le congé de raccordement n'est pas obligatoirement présent à l'intersection de chacune des intersections d'arêtes consécutives. Préférentiellement, toutes les ouvertures traversantes 14 ont un congé de raccordement au niveau de toutes les intersections des arêtes consécutives. La présence d'un congé de raccordement minimise les contraintes dans les nœuds (ou connections) entre les ouvertures traversantes 14. Dans le cadre de l'invention, on peut remplacer les congés de raccordements par des chanfreins ou tout autre géométrie permettant d'atténuer les pics de contraintes locaux aux connections ou nœuds. Au moins une parmi la pluralité d'ouvertures traversantes peut ainsi comprendre un chanfrein ou un congé de raccordement (ou toute autre forme visant à améliorer l'entrée de l'écoulement au travers de la structure) au niveau de l'intersection entre ladite ouverture traversante et la deuxième face.

Enfin, sur le fond intermédiaire représenté sur la figure 5, nous pouvons apercevoir des chanfreins. Il faut préciser que les chanfreins ne sont pas obligatoires, mais peuvent être présents, comme expliqué ci-après.

La **figure 6** représente schématiquement des exemples de section des ouvertures traversantes 14 du fond intermédiaire selon l'invention. Comme discuté plus haut, la section peut prendre n'importe quelle forme de ligne brisée fermée : triangulaire, rectangulaire, en losange, hexagonale, octogonale, etc. Avantageusement, les sections se juxtaposent de façon à s'imbriquer les unes à côté des autres avec des connections entre les ouvertures traversantes 14 très minces.

Il faut noter qu'avantageusement, le motif est répétitif. Mais l'invention couvre également la possibilité d'une alternance de plusieurs motifs, par exemple triangulaire sur une partie de la structure de base et hexagonale sur une autre partie.

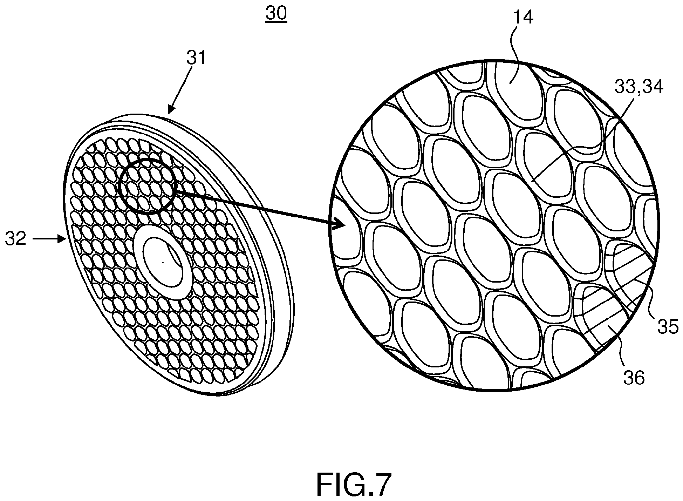

La **figure 7** représente schématiquement un autre mode de réalisation d'un fond intermédiaire 30 selon l'invention. La structure de base 13 du fond intermédiaire 30 comprend une première face 31 destinée à être positionnée vers la première chambre 11, une deuxième face 32 destinée à être positionnée vers la deuxième chambre 12. Au moins une parmi la pluralité d'ouvertures traversantes 14 comprend un moyen pour faciliter l'entrée de l'écoulement, par exemple un chanfrein 33 ou un congé de raccordement 34 (ou toute autre forme visant à améliorer l'entrée de l'écoulement au travers de la structure) au niveau de l'intersection entre ladite ouverture traversante 14 et la deuxième face 32. Cette caractéristique permet de faciliter l'écoulement des gaz issus de la combustion du deuxième chargement propulsif au travers du fond intermédiaire 30 entre la deuxième chambre 12 et la première chambre 11.

La structure de base peut être en céramique, par exemple C-SiC. La céramique n'étant pas soudable, un moyen de fixation du ou des opercules autre que le cordon de soudure est à considérer. La résistance mécanique des céramiques n'étant pas aussi importante que celle des aciers, la géométrie de la structure de base est à adapter. L'avantage d'une structure de base en céramique est qu'elle ne nécessite pas de protection thermique additionnelle.

Alternativement, la structure de base peut être métallique.

Selon une autre variante, la première face 31 et/ou deuxième face 32 et/ou des faces latérales 35 d'au moins une parmi la pluralité des ouvertures traversantes 14 sont recouvertes au moins partiellement d'une protection thermique 36, afin de protéger ces parties de l'ablation de l'écoulement de gaz de combustion issus du deuxième chargement propulsif. La protection thermique peut être une céramique. Ou bien elle peut être une protection thermique rigidimère, composite composé d'environ 70% de fibres ou poudre ou les deux, de carbone, de verre ou de silice ou de kevlar ou un mélange, et environ 30% d'une résine thermodurcissable, par exemple de la résine phénolique ou cyanate ester ou époxyde. Cette résine se décompose sous l'effet de la chaleur en laissant un résidu important de carbone, ce qui permet d'évacuer en partie l'énergie thermique des gaz et d'assurer le maintien du renfort. La protection thermique rigidimère nécessite une augmentation de l'épaisseur de la protection comparée à l'épaisseur d'une céramique. Alternativement, une protection thermique souple peut être utilisée, avec encore une augmentation supplémentaire de l'épaisseur de protection. La protection thermique souple est un composite composé d'environ 40% de fibres ou poudre ou les deux, de carbone, de verre, de silice ou de kevlar ou un mélange, et environ 60% d'un silicone, EPDM (abréviation de éthylène-propylène-diène monomère), ou polychloroprène.

On peut préciser que si le temps de combustion du deuxième chargement est court ou si l'ablation de la structure métallique du fond intermédiaire est tolérée, aucune protection thermique n'est utilisée.

Un exemple de structure métallique du fond intermédiaire est un acier inoxydable à durcissement structural type M300 , M250, 17-4 PH, 15-5 PH, X12, un acier au chrome, un alliage d'aluminium, d'iconel, de titane, etc.

La **figure 8** représente schématiquement le fond intermédiaire 10 selon l'invention du côté de la première face 31. On y voit le cadre externe 41 sur sa périphérie, et le premier opercule métallique 51 superposé à la première face 31 recouvrant la pluralité d'ouvertures traversantes 14 et fixé à la structure de base 13 au niveau du cadre externe 41 par un premier moyen de fixation 52 (par exemple un cordon de soudure, vis, rivet). L'opercule métallique plat 51 assure l'étanchéité, comme expliqué plus haut.

Dans le cas où le fond intermédiaire comprend une ouverture traversante 17 entre la première chambre 11 et la deuxième chambre 12 et un cadre interne 18 délimitant l'ouverture centrale 17, l'opercule 51 est en outre fixé à la structure de base 13 au niveau du cadre interne 18 par un troisième moyen de fixation 53, par exemple un cordon de soudure, vis, rivet. Alternativement, le ou les opercules peuvent être fixés à la structure de la première chambre de combustion.

La **figure 9** représente schématiquement un autre mode de réalisation d'un fond intermédiaire 40 permettant la réalisation de tests d'étanchéité et/ou hermicité selon l'invention. Le cadre externe 41 comprend une face externe 42 s'étendant à l'opposé de la structure de base 13 et deux faces internes 43, 44 destinées à être en contact respectivement avec la première et la deuxième chambres 11, 12, et le fond intermédiaire 40 comprend au moins un conduit 45 s'étendant entre la face externe 42 et une des chambres 11, 12. Ce type de conduit est facilement produit par fabrication additive. Il permet de relier l'extérieur du système propulsif bipulse à une ou aux deux chambres de combustion et permet d'effectuer des tests d'étanchéité ou d'herméticité. Sa géométrie s'affranchit de toutes les contraintes de l'usinage classique et le conduit peut prendre un profil aussi complexe qu'imaginable pour s'accommoder de l'espace disponible. Une fois les tests effectués à la fin du processus d'intégration du propulseur, le ou les conduits sont obturés par tout moyen 46, 47 permettant d'assurer une obturation, étanchéité, hermicité parfaite du ou des conduits (et donc de la ou des chambres de combustion), par exemple une vis conique.

La **figure 10** représente schématiquement une vue en coupe d'un autre mode de réalisation d'un fond intermédiaire 60 à sécurité augmentée selon l'invention. Le fond intermédiaire selon l'invention peut comprendre au moins un deuxième opercule métallique 61 superposé à la première face 31 et au premier opercule 51. Tout comme le premier opercule, il peut être fixé à la structure de base 13 au niveau du cadre externe 41 ou bien fixé à la structure de la première chambre de combustion par un deuxième moyen de fixation 54, par exemple un cordon de soudure ou tout autre moyen de fixation adapté tel qu'une vis ou un rivet. L'utilisation du deuxième opercule 61 augmente la marge de sécurité de l'opercule 51 qui peut être parfois critique du point de vue sécurité. Ce deuxième opercule 61 est préférentiellement plat et de même épaisseur que le premier opercule 51 mais légèrement plus grand en diamètre pour superposer le premier opercule 51. Le deuxième opercule 61 est lui aussi soudé au cadre externe 41 ou à la structure de la première chambre par des cordons de soudures supplémentaires. Ainsi la fonction critique de l'opercule est entièrement doublée, faisant ainsi décroître sa criticité. Sous la charge créée par le premier chargement propulsif, la résistance du système d'opercules avec ses deux opercules 51, 61 est double. Les deux opercules 51, 61 sont redondants. Sur le même principe, un troisième opercule peut recouvrir le deuxième opercule, qui peut être lui-même recouvert par un quatrième opercule, etc.

Le fond intermédiaire peut comprendre en outre au moins un élément de souplesse 64 positionné entre le premier opercule 51 et le deuxième opercule 61 (et/ou entre deux opercules adjacents dans le cas de plus de deux opercules), permettant de découpler le désoperculage des deux opercules 51 et 61 du système d'opercules. L'élément de souplesse est avantageusement positionné au niveau des périphéries des opercules, préférentiellement au niveau des moyens de fixation. Ainsi les moyens de fixation 52 et 53 du premier opercule 51 sont sollicités sans contribution de l'opercule 61 et de ses moyens de fixation 54 et 55, c'est l'élément de souplesse 64 qui est sollicité. Ainsi la résistance du système d'opercules à la pression du premier chargement propulsif 24 est doublée alors que la pression de désoperculage est inchangée. Autrement dit, quand le fond intermédiaire est soumis à une pression issue de la deuxième chambre, c'est le premier opercule 51 qui subit en premier cette pression. L'élément de souplesse 64, quant à lui, assure un rôle de tampon entre les deux opercules, si bien que le deuxième opercule 61 n'est pas sollicité par la pression issue de la deuxième chambre tant que le premier opercule 51 est présent et intact. Le premier opercule 51 s'ouvre à une pression prédéterminée (par exemple 4 MPa). Une fois ouvert, le deuxième opercule 61 est alors, seulement à partir de ce moment-là, exposé à la pression issue de la deuxième chambre (4 MPa dans notre exemple). Si le deuxième opercule 61 a une épaisseur et des moyens de fixation identiques à celle/ceux du premier opercule 51, il s'ouvre également à la même pression prédéterminée. Les deux opercules 51 et 61 sont bien redondants dans leur fonctionnement et assurent une plus grande sécurité : la résistance à la pression issue de la première chambre est double, et pour autant, les deux opercules 51, 61 s'ouvrent pour une pression prédéterminée, pouvant être plus faible, issue de la deuxième chambre. Les éléments de souplesse peuvent être placés entre deux opercules adjacents, en fonction du nombre d'opercules présents.

La **figure 11** représente schématiquement un propulseur 70 bipulse selon l'invention. Le propulseur 70 comprend au moins deux chambres de combustion 11, 12, chacune étant destinée à recevoir un chargement propulsif 24, 25. Le propulseur 70 comprend au moins un fond intermédiaire tel que décrit précédemment, positionné entre les deux chambres de combustion 11, 12.

L'invention s'applique aussi à toute enceinte sous pression comprenant plus que deux chambres juxtaposées, par exemple trois chambres avec deux fonds intermédiaires entre elles, ou plus que trois chambres.

Le propulseur 70 comprenant au moins deux chambres de combustion 11, 12, il peut ainsi être multipulse.

## Revendications

1. Fond intermédiaire (10, 20, 30, 40, 60, 100) pour enceinte sous pression à deux chambres (11, 12), le fond intermédiaire (10) étant destiné à être positionné entre une première chambre (11) et une deuxième chambre (12) de l'enceinte sous pression, et configuré pour résister à une première pression prédéterminée dans la première chambre (11) et laisser s'écouler un fluide issu de la deuxième chambre (12) au-delà d'une deuxième pression prédéterminée, comprenant :
- une structure de base (13) comprenant une première face (31) destinée à être positionnée vers la première chambre (11), une deuxième face (32) destinée à être positionnée vers la deuxième chambre (12), une pluralité d'ouvertures traversantes (14) entre la première face (31) et la deuxième face (32),
- un premier opercule métallique (51) superposé à la première face (31) recouvrant la pluralité d'ouvertures traversantes (14),
**caractérisé en ce que** la pluralité d'ouvertures traversantes (14) a une section polygonale.

2. Fond intermédiaire (10, 20, 30, 40, 60, 100) selon la revendication 1, **caractérisé en ce qu'**une section polygonale a une arête (15) sensiblement parallèle à une arête (16) d'une section polygonale qui lui est adjacent.

3. Fond intermédiaire (20, 30, 40, 60, 100) selon la revendication 1 ou 2, **caractérisé en ce qu'**au moins une parmi la pluralité d'ouvertures traversantes (14) comprend un moyen pour réduire les concentrations de contraintes (21) au niveau d'au moins une intersection de deux arêtes (22, 23) de la section, préférentiellement un congé de raccordement ou un chanfrein.

4. Fond intermédiaire (30, 40, 60, 100) selon l'une des revendications 1 à 3, **caractérisé en ce qu'**au moins une parmi la pluralité d'ouvertures traversantes (14) comprend un moyen pour faciliter l'entrée de l'écoulement (33, 34) au niveau de l'intersection entre ladite ouverture traversante (14) et la deuxième face (32), préférentiellement un chanfrein (33) ou un congé de raccordement (34).

5. Fond intermédiaire (10, 20, 30, 40, 60, 100) selon l'une quelconque des revendications précédentes, **caractérisé en ce que** la structure de base est en céramique.

6. Fond intermédiaire (10, 20, 30, 40, 60, 100) selon l'une quelconque des revendications 1 à 4, **caractérisé en ce que** la structure de base est métallique.

7. Fond intermédiaire (30, 40, 60, 100) selon la revendication 6, **caractérisé en ce que** la première face (31) et/ou deuxième face (32) et/ou des faces latérales (35) d'au moins une parmi la pluralité des ouvertures traversantes (14) sont recouvertes au moins partiellement d'une protection thermique (36).

8. Fond intermédiaire (40, 60, 100) selon l'une des revendications 1 à 7, **caractérisé en ce qu'**il comprend un cadre externe (41) sur sa périphérie, **en ce que** le cadre externe (41) comprend une face externe (42) s'étendant à l'opposé de la structure de base (13) et deux faces internes (43, 44) destinées à être en contact respectivement avec la première et la deuxième chambres (11, 12), et **en ce que** le fond intermédiaire (40) comprend au moins un conduit (45) s'étendant entre la face externe (42) et une des chambres (11, 12).

9. Fond intermédiaire (60, 100) selon l'une des revendications 1 à 8, **caractérisé en ce que** le fond intermédiaire (60) comprend au moins un deuxième opercule métallique (61) superposé à la première face (31) et au premier opercule (51).

10. Fond intermédiaire (60, 100) selon la revendication 9, **caractérisé en ce qu'**il comprend en outre au moins un élément de souplesse (64) positionné entre le premier opercule (51) et le deuxième opercule (61) et/ou entre deux opercules adjacents.

11. Fond intermédiaire (100) selon l'une des revendications 1 à 10, **caractérisé en ce que** la structure de base (13) comprend une ouverture centrale traversante (17) entre la première face (31) et la deuxième face (32) et un cadre interne (18) délimitant l'ouverture centrale (17).

12. Fond intermédiaire (10, 20, 30, 40, 60, 100) selon l'une des revendications précédentes, **caractérisé en ce que** l'enceinte sous pression à deux chambres est un propulseur bipulse, le propulseur bipulse comprenant :
- la première chambre (11) étant une première chambre de combustion (11) destinée à recevoir un premier chargement propulsif (24) et la deuxième chambre (12) étant une deuxième chambre de combustion (12) destinée à recevoir un deuxième chargement propulsif (25),
- un premier dispositif d'allumage (26) destiné à allumer le premier chargement propulsif (24),
- un deuxième dispositif d'allumage (27) destiné à allumer le deuxième chargement propulsif (25),
- un ensemble-tuyère (19) composé de une ou plusieurs tuyères par lequel la détente de gaz de combustion issus du premier et/ou deuxième chargements propulsifs (24, 25) après allumage du premier et/ou deuxième chargements propulsifs (24, 25) s'effectue, le fond intermédiaire étant configuré pour résister à la première pression prédéterminée dans la première chambre de combustion due aux gaz de combustion issus du premier chargement propulsif (24) après allumage du premier chargement propulsif (24) et laisser s'écouler le fluide formé des gaz de combustion issus du deuxième chargement propulsif (25) après allumage du deuxième chargement propulsif (25).

13. Propulseur (70) comprenant au moins deux chambres de combustion, chacune étant destinée à recevoir un chargement propulsif, **caractérisé en ce qu'**il comprend au moins un fond intermédiaire (10, 20, 30, 40, 60, 100) selon la revendication 12, positionné entre les deux chambres de combustion.
